# EUROPÄISCHE PATENTANMELDUNG

(11) **EP 1 413 789 A1**
(43) Veröffentlichungstag der Anmeldung: **28.04.2004**
(21) Anmeldenummer: 02024010.7
(22) Anmeldetag: 26.10.2002
(51) Int. Cl.: F16D 3/74, F16D 3/78

(54) **Elastische Wellenkupplung**

(71) Anmelder: Stromag AG, 59425 Unna (DE)
(72) Erfinder: Bittner, Heinrich, 59174 Kamen (DE); Dorok, Günter, 59174 Kamen (DE); Kerstin, Gunter, 59494 Soest (DE)
(74) Vertreter: Patentanwälte Ruff, Wilhelm, Beier, Dauster & Partner

(57) **Zusammenfassung**

Eine Wellenkupplung (1) mit wenigstens zwei in Umfangsrichtung aneinandergereihten Kupplugssegmenten (3a,3b), die jeweils aus zwei einer Antriebs- und einer Abtriebsseite zugeordneten formstabilen Segmentteilen (7a,7b,9a,9b) sowie wenigstens einem drehelastischen, zwischen den Segmentteilen angeordneten Elastomerelement (8a) aufgebaut sind, ist bekannt.

Erfindungsgemäß ist jedes Kupplungssegment (3a,3b) als sich über einen halben Kupplungsumfang erstreckende einteilige Ringhälfe gestaltet, und jedes Segmentteil (7a,7b,9a,9b) jedes Kupplungssegmentes ist als kalt umgeformtes Blechplattenteil ausgeführt.

Einsatz für große dieselmotorische Antriebe.

## Beschreibung

Die Erfindung betrifft eine elastische Wellenkupplung mit wenigstens zwei in Umfangsrichtung aneinandergereihten Kupplungssegmenten, die jeweils aus zwei formstabilen Segmentteilen sowie wengistens einem drehelastischen, zwischen den Segmentteilen angeordneten Elastomerelement aufgebaut sind.

Derartige elastische Wellenkupplungen sind allgemein bekannt. Eine solche elastische Wellenkupplung ist zur Übertragung von Antriebskräften vorgesehen, bei denen ein Wellenversatz zwischen zwei miteinander zu kuppelnden Wellen des Antriebsstranges vorgesehen ist. Zudem dient eine solche elastische Wellenkupplung zur Dämpfung von Vibrationen. Die elastischen Wellenkupplung weist mehrere in Umfangsrichtung aneinandergereihte, gleich große Kupplungssegmente auf. Jedes Kupplungssegment besteht aus zwei axial zueinander beabstandeten, formstabilen Segmentteilen, die einer Antriebsseite bzw. einer Abtriebsseite zugeordnet sind. Die beiden Segmentteile sind durch eine zwischenliegende, drehelastische Elastomeranordnung miteinander verbunden, die an die benachbarten Stirnseite der axial gegenüberliegenden Segmentteile anvulkanisiert ist.

Aufgabe der Erfindung ist es, eine Wellenkupplung der eingangs genannten Art zu schaffen, die geringe Herstellkosten aufweist und einfach montierbar ist.

Diese Aufgabe wird dadurch gelöst, dass jedes Kupplungssegment als sich über einen halben Kupplungsumfang erstreckende, einteilige Ringhälfte gestaltet ist, und dass jedes Segmentteil jedes Kupplungssegmentes als kalt umgeformtes Blechplattenteil gestaltet ist. Die erfindungsgemäße Lösung geht von der Erkenntnis aus, dass die Vorteile einer einteiligen, d.h. in Umfangsrichtung durchgängigen Ringkupplung im Hinblick auf Herstellkosten und die Vorteile einer segmentierten Wellenkupplung, wie sie eingangs beschrieben wurde, im Hinblick auf eine einfache Montierbarkeit miteinander kombiniert werden müssen. Die erfindungsgemäße Wellenkupplung kommt demzufolge mit lediglich zwei Kupplungssegmenten auf, die jeweils als Ringhälfte gestaltet sind. Dadurch ist die Höhe der Herstellkosten, die abhängig von der Anzahl der Kupplungssegmente ist, soweit wie möglich reduziert. Gleichzeitig wird dennoch der Vorteil einer einfachen Montierbarkeit aufrechterhalten, indem aufgrund des Vorhandenseins von zwei halbringförmigen Kupplungssegmenten eine einfache, insbesondere eine radiale Montage ermöglicht ist. Die erfindungsgemäße Lösung ist zudem zu der Erkenntnis gelangt, dass es möglich ist, die Segmentteile als kaltgeformte Blechplattenteile zu gestalten. Im Gegensatz zum Stand der Technik, der für die Segmentteile ausschließlich Gussteile verwendet, lässt sich hierdurch zum einen eine weitere Reduzierung der Herstellkosten erzielen. Zum anderen ist es durch den Einsatz von Blechplattenteilen möglich, die Baugröße und insbesondere die Dicke der Segmentteile zu reduzieren und dennoch günstige Materialeigenschaften im Hinblick auf die jeweilgen Kupplungsfunktionen zu erzielen. Die erfindungsgemäße Lösung, die lediglich zwei Kupplungssegmente pro Reihe einsetzt, hat lediglich zwei Stoßstellen an den in Umfangsrichtung aneinanderschließenden Endbereichen der Kupplung. Dadurch ist eine hohe Qualitätssicherheit erreichbar. Falls die Kupplung mehrere, axial aneinanderschließende Reihen von jeweils zwei Kupplungssegmenten aufweist, so sind die verschiedenen Reihen benachbarter Kupplungssegmente vorzugsweise um 90° versetzt zueinander angeordnet, so dass die Stoßstellen der beiden Kupplungssegmente jeweils einer Reihe entsprechend versetzt zu den Stoßstellen der Kupplungssegmente der benachbarten Reihe positioniert sind.

In weiterer Ausgestaltung der Erfindung ist zwischen zwei Blechplattenteilen jeweils ein einzelnes, massives und halbringförmiges Elastomerelement anvulkanisiert. Dadurch, dass das Elastomerelement massiv und halbringförmig gestaltet ist, ist eine besonders gute und gleichmässige Drehmomentübertragung ermöglicht. Massive Gestaltung bedeutet, dass keine Belüftungsaussparungen oder ähnliches innerhalb des Elastomerelementes vorgesehen sind.

In weiterer Ausgestaltung der Erfindung ergänzen sich die Kupplungssegmente zu einer Kupplungsgröße, deren Kupplungsdurchmesser größer als 800 mm ist. Diese Ausgestaltung eignet sich insbesondere für große dieselmotorische Antriebe bei Schiffen und Generatoren. Vorzugsweise sind die Kupplungssegmente derart dimensioniert, dass sie ein Drehmoment von > 20 kNm übertragen.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
Fig. 1 zeigt in einem Längsschnitt eine Ausführungsform einer erfindungsgemäßen, einreihigen Wellenkupplung,
Fig. 2 in einem Längsschnitt eine Ausführung einer erfindungsgemäßen zweireihigen Kupplung, und
Fig. 3 einen Querschnitt entlang der Schnittlinie III-III durch eine Kupplungssegmentreihe gemäß Fig. 1 oder 2.

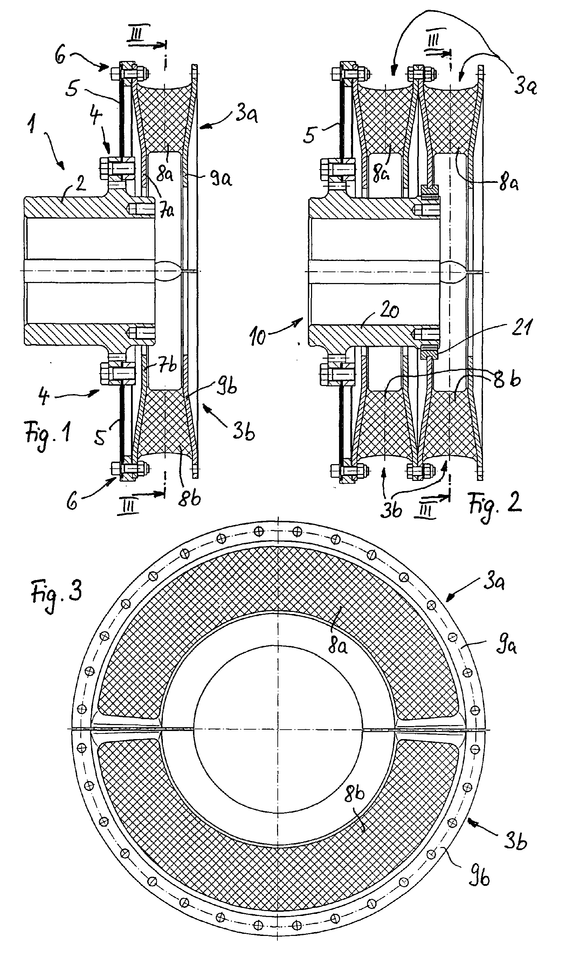

Eine hochelastische Wellenkupplung 1 gemäß den Fig. 1 und 3 weist eine Kupplungsnabe 2 auf, die auf eine nicht näher dargestellte Antriebswelle axial aufschiebbar und drehschlüssig mit dieser verbindbar ist. Die Kupplungsnabe 2 ist ringförmig gestaltet. Um Antriebskräfte der Antriebswelle auf eine nicht dargestellte Abtriebsseite übertragen zu können, weist die Kupplung 1 zwei Kupplungssegmente 3a, 3b auf, die jeweils halbringförmig gestaltet sind und sich über einen überstrichenen Winkel von 180° erstrecken. Die beiden Kupplungssegmente 3a, 3b schließen in Umfangsrichtung in einer Reihe, d.h. in derselben radialen Ebene, einander an. Beide Kupplungssegmente 3a, 3b sind identisch gestaltet.

Jedes Kupplungssegment 3a, 3b weist zwei scheiben- oder plattenförmige, formstabile Segmentteile auf, die beim dargestellten Ausführungsbeispiel jeweils aus einer gewalzten Stahlblechplatte hergestellt und kalt umgeformt sind. Die beiden, als Segmentteile dienenden Blechplattenteile 7a, 9a bzw. 7b, 9b sind axial zueinander beabstandet und jeweils halbring- oder halbscheibenförmig ausgeführt. An die einander zugewandten Innenflächen der beiden Blechplattenteile jedes Kupplungssegmentes 3a, 3b ist ein halbringförmiges Elastomerelement 8a anvulkanisiert, das massiv und durchgängig sich über nahezu den gesamten Umfangswinkel der beiden Blechplattenteile 7a, 9a; 7b, 9b erstreckt.

Wie anhand der Fig. 3 erkennbar ist, sind die beiden Kupplungssegmente 3a, 3b mit geringem Spaltabstand im Bereich ihrer Stoßkanten nahezu bündig aneinander gefügt. Die Verbindung der beiden Kupplungssegmente 3a, 3b miteinander erfolgt im Bereich von Außenflanschen der Blechplattenteile 7a, 7b mittels eines umlaufenden, einteiligen Befestigungsringes 6, der mit den Ringflanschen der Blechplattenteile 7a, 7b verschraubt ist. Der Befestigungsring 6 ist durch eine Membran 5 oder durch mehrere über den Umfang verteilte Membranteile mit einem umlaufenden Ringflansch der Kupplungsnabe 2 verbunden. Die ringförmige Membran 5 erstreckt sich von dem Ringflansch 4 aus radial nach außen. Die Membran 5 ist mit dem Ringflansch 4 der Kupplungsnabe 2 verschraubt.

Eine Kupplung 10 gemäß den Fig. 2 und 3 ist zweireihig gestaltet, indem zwei Reihen von Kupplungssegmenten 3a, 3b axial aneinanderschließend positioniert sind. Die Kupplungssegmente 3a, 3b entsprechend den Kupplungssegmenten 3a, 3b der Ausführungsform nach Fig. 1, so dass für eine nähere Erläuterung der Kupplungssegmente 3a, 3b zu Fig. 2 auf die Beschreibung zu Fig. 1 verwiesen werden kann. Die Wellenkupplung 10 weist eine Kupplungsnabe 20 auf, die ebenfalls mit einem Ringflansch zur Halterung einer Membran 5 versehen ist, die widerum mittels eines Befestigungsringes eine erste Reihe von Kupplungssegmenten 3a, 3b trägt. Die zweite Reihe von identisch gestalteten Kupplungssegmenten 3a, 3b ist an das erste Kupplungssegmentpaar axial angefügt, indem äußere Ringflanschabschnitte der benachbarten Blechplattenteile beider Kupplungssegmentreihen umlaufend miteinander verschraubt sind. Die in Abtriebsrichtung zweite Kupplungssegmentreihe wird durch einen Stützring 21 auf der Kupplungsnabe 20 abgestützt. Die abtriebsseitigen Blechplattenteile der - in Abtriebsrichtung gesehen - zweiten Kupplungsegmentreihe werden in nicht näher dargestellter Weise an entsprechende Ringflanschabschnitte der Abtriebsseite angefügt und mit diesen verschraubt.

## Patentansprüche

1. Elastische Wellenkupplung mit wenigstens zwei in Umfangsrichtung aneinandergereihten Kupplungssegmenten, die jeweils aus zwei formstabilen Segmentteilen sowie wenigstens einem drehelastischen, zwischen den Segmentteilen angeordneten Elastomerelement aufgebaut sind, **dadurch gekennzeichnet, dass** jedes Kupplungssegment (3a, 3b) als sich über einen halben Kupplungsumfang erstreckende, einteilige Ringhälfte gestaltet ist, und dass jedes Segmentteil (7a, 7b; 9a, 9b) jedes Kupplungssegmentes (3a, 3b) als kalt umgeformtes Blechplattenteil gestaltet ist.

2. Wellenkupplung nach Anspruch 1, **dadurch gekennzeichnet, dass** als Blechplattenteil ein gewalztes Stahlblechteil vorgesehen ist.

3. Wellenkupplung nach Anspruch 1, **dadurch gekennzeichnet, dass** zwischen zwei Blechplattenteilen (7a, 9a; 7b, 9b) jeweils ein einzelnes, massives und halbringförmiges Elastomerelement (8a, 8b) anvulkanisiert ist.

4. Wellenkupplung nach Anspruch 1, **dadurch gekennzeichnet, dass** die Kupplungssegmente (3a, 3b) sich zu einer Kupplungsgröße ergänzen, deren Kupplungsdurchmesser größer als 800 mm ist.

5. Wellenkupplung nach Anspruch 1, **dadurch gekennzeichnet, dass** die Kupplungssegmente (3b) derart dimensioniert sind, dass sie ein Drehmoment von größer als 20 kNm übertragen.
